# EUROPEAN PATENT SPECIFICATION

(11) **EP 2 853 378 B1**
(45) Date of publication and mention of the grant of the patent: **26.12.2018**
(21) Application number: 13794102.7
(22) Date of filing: 26.02.2013
(51) Int. Cl.: B29C 65/18, B29C 65/20, B29C 65/78, B65B 51/26

(54) **PLASTIC FILM HEAT-SEALING DEVICE**
VORRICHTUNG ZUM HEISSSIEGELN EINER KUNSTSTOFFFOLIE
DISPOSITIF DE THERMOSCELLAGE DE FILM EN MATIÈRE PLASTIQUE

(30) Priority: 23.05.2012 JP 2012117404
(43) Date of publication of application: 01.04.2015
(73) Proprietor: Totani Corporation, Kyoto-shi Kyoto 601-8213 (JP)
(72) Inventor: OHNISHI, Hideo, Kyoto 601-8213 (JP); FUJITA, Takashi, Kyoto 601-8213 (JP)
(74) Representative: Pfenning, Meinig & Partner mbB
(86) International application number: PCT/JP2013/054940
(87) International publication number: WO 2013/175822

(56) References cited:
- JP-A- H03 200 522
- JP-A- H10 297 619
- JP-A- 2003 231 506

## Description

### Technical Field

The invention relates to a plastic film heat seal apparatus in which a plastic film is fed longitudinally thereof, the plastic film including opposite side edge portions superposed with each other, the side edge portions being heat sealed with each other longitudinally thereof.

### Background

For example, in a machine for successively making plastic bags called pillow pouches, it is often the case that a plastic film is fed longitudinally thereof. The plastic film includes opposite side edge portions superposed with each other, the opposite side edge portions being heat sealed with each other longitudinally thereof. Japanese Patent Publication No. H07-37,253 discloses a plastic film heat seal apparatus incorporated into the machine and including a pair of heaters disposed on opposite sides of the side edge portions. The heaters have heating surfaces to preheat the side edge portions, the heating surfaces being spaced from and opposed to each other. In addition, the apparatus includes a pair of pinch rollers disposed on the opposite sides of the side edge portions at a position downstream of the heaters. The side edge portions are sandwiched between the pinch rollers after preheating, to be heat sealed with each other.

The plastic film comprises a laminated film composed of a sealant laminated on a base material. For example, the plastic film comprises an OPP (base material) - CPP (sealant) film. The side edge portions are therefore heat sealed with each other by sealant when being sandwiched between the pinch rollers.

However, the apparatus has a problem of space between the heating surfaces of heaters. In case the space is adjusted precisely between the heating surfaces to correspond to the thickness of the side edge portions so that the side edge portions are brought into contact with the heating surfaces to preheat the side edge portions efficiently when the plastic film is fed longitudinally thereof, the side edge portions must also be brought into contact with each other. The sealants are therefore welded to each other partially when the side edge portions are brought into contact. The side edge portions are then sandwiched between the pinch rollers to be heat sealed with each other so that a seal portion is formed between the side edge portions. Air is therefore mixed into and trapped in the seal portion so that the seal portion is low in seal strength and impaired in appearance. Alternatively, in case the space is enlarged between the heating surfaces more than the thickness of the side edge portions so that a clearance is formed between the side edge portions to keep them from being brought into contact with each other, the side edge portions cannot be brought into contact with the heating surfaces, resulting in a problem of not preheating the side edge portions efficiently. The side edge portions can therefore not be heat sealed with other adequately.

In the patent publication, it is also proposed that a plurality of spouting holes is formed in each of the heating surfaces to spout air from the spouting holes. The side edge portions are pressed against each other by air when spouting, to be heat sealed with each other without using the pinch rollers between which the side edge portions are sandwiched. However, in this case, it would appear that the seal strength is lowered in comparison with the side edge portions being pressed against each other by the pinch rollers, by reason that the side edge portions are merely pressed against each other by air.

It is therefore an object of the invention to provide a plastic film heat seal apparatus in which a plastic film is fed longitudinally thereof, the plastic film including opposite side edge portions superposed with each other, the side edge portions being heat sealed with each other longitudinally thereof, to make the side edge portions heat sealed with each other adequately not to be low in seal strength and not to be impaired in appearance.

### Summary of the Invention

According to the invention, the apparatus includes a pair of heaters disposed on opposite sides of the side edge portions. The heaters have heating surfaces to preheat the side edge portions, the heating surfaces being spaced from and opposed to each other. A plurality of suction holes is formed in each of the heating surfaces. A flow path is formed in each of the heaters and communicated with the suction holes to suck air into the suction holes so that the side edge portions are attracted by the suction holes to be brought into contact with the heating surfaces. In addition, the apparatus includes a pair of pinch rollers disposed on the opposite sides of the side edge portions at a position downstream of the heaters. The side edge portions are sandwiched between the pinch rollers after preheating, to be heat sealed with each other.

In a preferred embodiment, the suction holes are spaced from each other in a direction in which the plastic film is fed.

Not the plurality of suction holes but an elongated suction groove may be formed in each of the heating surfaces. The flow path is formed in each of the heaters and communicated with the suction groove to suck air into the suction groove so that the side edge portions are attracted by the suction grooves to be brought into contact with the heating surfaces.

### Brief Description of the Drawings

Fig. 1 is a plan view (A) of a preferred embodiment of the invention, a side view (B) of the apparatus of (A), a sectional view (C) of the heater of (A) and a perspective view (D) of the heater of (A).
Fig. 2 is a photograph of the side edge portions heat sealed with each other by the apparatus of Fig. 1.
Fig. 3 is a photograph of the side edge portions heat sealed with each other by the prior art.
Fig. 4 is a side view (A) of another embodiment and a side view (B) of another embodiment.

### Best Mode to Carry Out the Invention

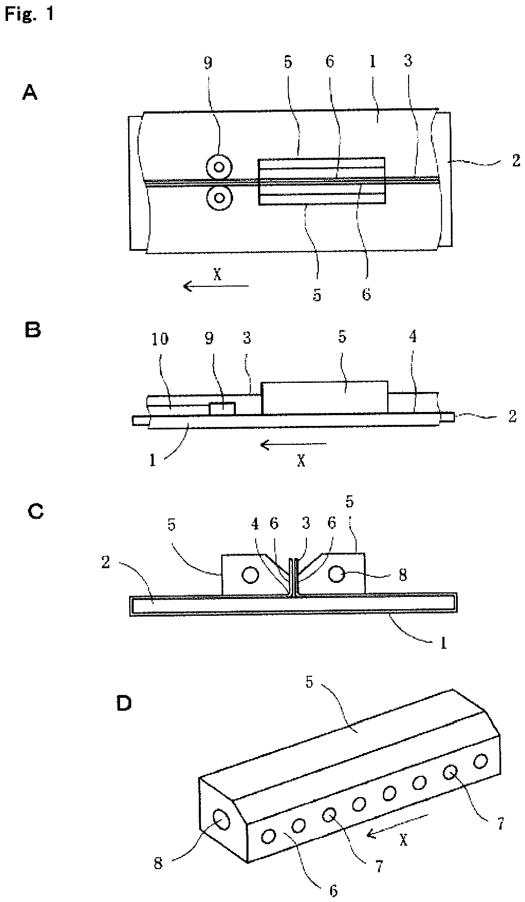

Turning now to the drawings, Fig. 1 illustrates a plastic film heat seal apparatus, according to the invention. The apparatus is incorporated into a machine for successively making plastic bags called pillow pouches, in which a plastic film 1 is fed longitudinally thereof and guided and folded by a former to be disposed around a guide plate 2. The plastic film 1 is tube shaped to be disposed around the guide plate 2. In addition, the plastic film 1 includes opposite side edge portions 3 folded along longitudinal folded lines 4 to protrude from the guide plate 2. The plastic film 1 is then fed along the guide plate 2 so that the side edge portions 3 are superposed with each other, the side edge portions 3 being heat sealed with each other longitudinally thereof. The plastic film 1 then passes through the guide plate 2 to be heat sealed widthwise thereof and crosscut widthwise, successively making plastic bags, as in the case of the prior art.

The apparatus includes a pair of heaters 5 disposed above the guide plate 2 and spaced from each other. The plastic film 1 is fed along the guide plate 2 so that the side edge portions 3 are interposed between the heaters 5, before being heat sealed longitudinally thereof. It should therefore be understood that the heaters 5 are disposed on opposite sides of the side edge portions 3. Each of the heaters 5 has a length and extends parallel to the guide plate 2 and in a direction X in which the plastic film 1 is fed. The heaters 5 have heating surfaces 6 to preheat the side edge portions 3, the heating surfaces 6 being spaced from and opposed to each other, as also in the case of the prior art.

In the apparatus, a plurality of suction holes 7 is formed in each of the heating surfaces 6. A flow path 8 is formed in each of the heaters 5 and communicated with the suction holes 7, a blower or vacuum pump being connected the flow path 8. In the embodiment, the suction holes 7 are spaced from each other in the direction X in which the plastic film 1 is fed. The flow path 8 is therefore evacuated by the blower or vacuum pump to suck air into the suction holes 7 so that the side edge portions 3 are attracted by the suction holes 7 to be brought into contact with the heating surfaces 6.

In addition, the apparatus includes a pair of pinch rollers 9 disposed on the opposite sides of the side edge portions 3 at a position downstream of the heaters 5. The pinch rollers 9 are supported for rotation about a shaft extending normal to the guide plate 2. The side edge portions 3 are directed to and sandwiched between the pinch rollers 9 after preheating, to be heat sealed with each other by means of the pinch rollers 9 rotated by friction when the plastic film 1 is fed, making a heat seal portion 10 formed. The pinch rollers 9 may be rotated by a drive motor.

The plastic film 1 comprises a laminated film composed of a sealant laminated on a base material. For example, the plastic film 1 comprises an OPP (base material) - CPP (sealant) film, as in the case of the prior art. The side edge portions 3 are therefore heat sealed with each other by sealant when being sandwiched between the pinch rollers 9.

In the apparatus, a space has not to be adjusted precisely between the heating surfaces 6 to correspond to the thickness of the side edge portions 3. The side edge portions 3 are attracted by the suction holes 7 to be brought into contact with the heating surfaces 6, even if the space is enlarged than the thickness of the side edge portions 3 not to correspond thereto. The heating surfaces 6 can therefore preheat the side edge portions 3 efficiently when the plastic film 1 is fed longitudinally thereof. In addition, a clearance is formed between the side edge portions 3 when the space is enlarged than the thickness of the side edge portions 3 by reason of the side edge portions 3 being attracted by the suction holes 7, to keep the side edge portions 3 from being brought into contact with each other, the sealants being therefore not welded to each other partially. The side edge portions 3 are then sandwiched between the pinch rollers 9 to be heat sealed with each other so that a seal portion is formed between the side edge portions 3. Air is therefore not mixed into and trapped in the seal portion of side edge portions 3.

The apparatus can therefore preheat the side edge portions 3 efficiently so that the side edge portions 3 are heat sealed with each other adequately. Air is not mixed into and trapped in the seal portion, resulting in the seal portion being not low in seal strength and not impaired in appearance.

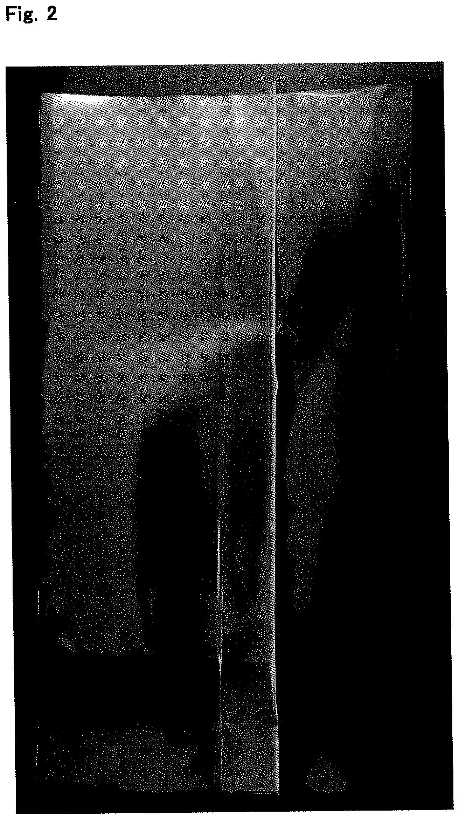

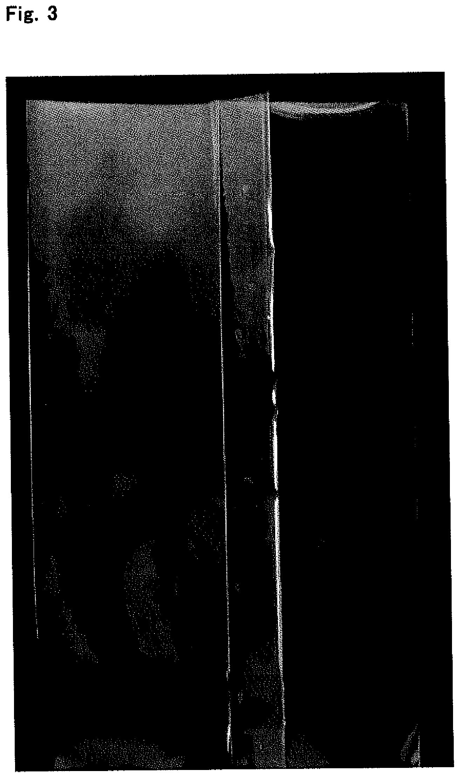

Fig. 2 illustrates the side edge portions 3 heat sealed with each other by the apparatus of Fig. 1. The plastic film 1 comprises the OPP (base film) - CPP (sealant) film and has a thickness of 78*µ*m. It is clear from Fig. 2 that air is not mixed into and trapped in the seal portion of side edge portions 3. Fig. 3 illustrates the side edge portions 3 heat sealed with each other by the prior art. The apparatus includes the heaters 5 and the pinch rollers 9 but no suction hole 7 being formed in each of the heating surfaces 6. The plastic film 1 comprises the OPP (base film) - CPP (sealant) film and has a thickness of 78*µ*m. It is clear from Fig. 3 that air is mixed into and trapped in the seal portion of side edge portions 3.

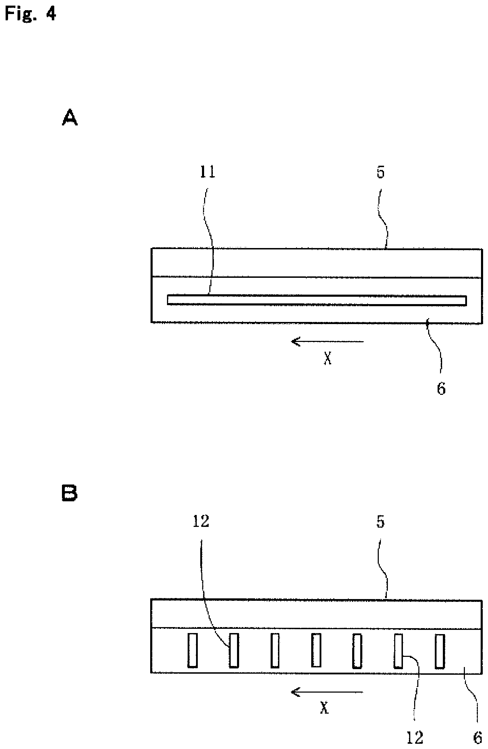

Not the plurality of suction holes 7 but an elongated suction groove 11 may be formed in each of the heating surfaces 6, as shown in Fig. 4. In the embodiment, the flow path 8 is formed in each of the heaters 5 and communicated with the suction groove 11, the suction groove 11 extending parallel to the guide plate 2 and in the direction X in which the plastic film 1 is fed. The air flow path 8 is evacuated by the blower or vacuum pump to suck air into the suction groove 11 so that the side edge portions 3 are attracted by the suction groove 11 to be brought into contact with the heating surfaces 8.

A plurality of suction grooves 12 may be spaced from each other in the direction X in which the plastic film 1 is fed (Fig. 4 B). In this case, the suction grooves 12 has not to extend in the direction X in which the plastic film 1 is fed. They may extend vertical to the direction X. They may extend obliquely.

## Claims

1. A plastic film heat seal apparatus in which a plastic film (1) is fed longitudinally thereof, the plastic film (1) including opposite side edge portions (3) superposed with each other, the side edge portions (3) being heat sealed with each other longitudinally thereof, the apparatus comprising:
a pair of heaters (5) disposed on opposite sides of the side edge portions (3) and having heating surfaces (6) to preheat the side edge portions (3), the heating surfaces (6) being spaced from and opposed to each other; and
a pair of pinch rollers (9) disposed on the opposite sides of the side edge portions (3) at a position downstream of the heaters (5), the side edge portions (3) being sandwiched between the pinch rollers (9) after preheating, to be heat sealed with each other.
the apparatus being **characterized by**
a plurality of suction holes (7) formed in each of the heating surfaces (6); and
a flow path (8) formed in each of the heaters (5) and communicated with the suction holes (7) to suck air into the suction holes (7) so that the side edge portions (3) are attracted by the suction holes (7) to be brought into contact with the heating surfaces (6).

2. The apparatus as set forth in claim 1 wherein the suction holes (7) are spaced from each other in a direction (X) in which the plastic film (1) is fed.

3. A plastic film heat seal apparatus in which a plastic film (1) is fed longitudinally thereof, the plastic film (1) including opposite side edge portions (3) superposed with each other, the side edge portions (3) being heat sealed with each other longitudinally thereof, the apparatus comprising:
a pair of heaters (5) disposed on opposite sides of the side edge portions (3) and having heating surfaces (6) to preheat the side edge portions (3), the heating surfaces (6) being spaced from and opposed to each other; and
a pair of pinch rollers (9) disposed on the opposite sides of the side edge portions (3) at a position downstream of the heaters (5), the side edge portions (3) being sandwiched between the pinch rollers (9) after preheating, to be heat sealed with each other,
the apparatus being **characterized by**
an elongated suction groove (11, 12) formed in each of the heating surfaces (6); and
a flow path (8) formed in each of the heaters (5) and communicated with the suction groove (11, 12) to suck air into the suction groove (11, 12) so that the side edge portions (3) are attracted by the suction grooves (11, 12) to be brought into contact with the heating surfaces (6).

## Patentansprüche

1. Kunststofffolien-Heißsiegelvorrichtung, in der eine Kunststofffolie (1) in der Längsrichtung hiervon zugeführt wird, wobei die Kunststofffolie (1) gegenüberliegende Seitenkantenbereiche (3) enthält, die einander überlagert sind, und die Seitenkantenbereiche (3) in ihrer Längsrichtung miteinander heißversiegelt sind, welche Vorrichtung aufweist:
ein Paar von Heizvorrichtungen (5), die auf entgegengesetzten Seiten der Seitenkantenbereiche (3) angeordnet sind und Heizflächen (6) zum Vorheizen der Seitenkantenbereiche (3) haben, wobei die Heizflächen (6) im Abstand voneinander und einander gegenüberliegend sind; und
ein Paar von Klemmrollen (9), die auf den entgegengesetzten Seiten der Seitenkantenbereiche (3) an einer Position stromabwärts der Heizvorrichtungen (5) angeordnet sind, wobei die Seitenkantenbereiche (3) nach dem Vorheizen zwischen den Klemmrollen (9) eingeklemmt werden, um miteinander heißversiegelt zu werden,
wobei die Vorrichtung **gekennzeichnet ist durch**
mehrere Sauglöcher (7), die in jeder der Heizflächen (6) gebildet sind; und
einen Strömungspfad (8), der in jeder der Heizvorrichtungen (5) gebildet und mit den Sauglöchern (7) verbunden ist, um Luft in die Sauglöcher (7) zu saugen, so dass die Seitenkantenbereiche (3) durch die Sauglöcher (7) angezogen werden, um in Kontakt mit den Heizflächen (6) gebracht zu werden.

2. Vorrichtung nach Anspruch 1, bei der die Sauglöcher (7) in einer Richtung (X), in der die Kunststofffolie (1) zugeführt wird, einen gegenseitigen Abstand aufweisen.

3. Kunststofffolien-Heißsiegelvorrichtung, in der eine Kunststofffolie (1) in ihrer Längsrichtung zugeführt wird, wobei die Kunststofffolie (1) gegenüberliegende Seitenkantenbereiche (3), die einander überlagert sind, enthält, wobei die Seitenkantenbereiche (3) in ihrer Längsrichtung miteinander heißversiegelt sind, welche Vorrichtung aufweist:
ein Paar von Heizvorrichtungen (5), die auf entgegengesetzten Seiten der Seitenkantenbereiche (3) angeordnet sind und Heizflächen (6) haben, um die Seitenkantenbereiche (3) vorzuheizen, wobei die Heizflächen (6) einen gegenseitigen Abstand aufweisen und einander gegenüberliegen; und
ein Paar von Klemmrollen (9), die auf den entgegengesetzten Seiten der Seitenkantenbereiche (3) an einer Position stromabwärts der Heizvorrichtungen (5) angeordnet sind, wobei die Seitenkantenbereiche (3) nach dem Vorheizen zwischen den Klemmrollen (9) eingeklemmt werden, um miteinander heißversiegelt zu werden,
welche Vorrichtung **gekennzeichnet ist durch**
eine längliche Saugnut (11, 12), die in jeder der Heizflächen (6) gebildet ist; und
einen Strömungspfad (8), der in jeder der Heizvorrichtungen (5) gebildet und mit der Saugnut (11, 12) verbunden ist, um Luft in die Saugnut (11, 12) zu saugen, so dass die Seitenkantenbereiche (3) durch die Saugnuten (11, 12) angezogen werden, um in Kontakt mit den Heizflächen (6) gebracht zu werden.

## Revendications

1. Appareil de thermo-scellage pour film en matière plastique, dans lequel un film en matière plastique (1) est alimenté suivant sa direction longitudinale, le film en matière plastique (1) incluant des parties de bord latéral opposées (3) qui sont superposées l'une sur l'autre, les parties de bord latéral (3) étant thermo-scellées l'une avec l'autre suivant leur direction longitudinale, l'appareil comprenant :
une paire de moyens de chauffage (5) qui sont disposés sur des côtés opposés des parties de bord latéral (3) et qui comportent des surfaces de chauffage (6) de manière à préchauffer les parties de bord latéral (3), les surfaces de chauffage (6) étant espacées l'une de l'autre et opposées l'une à l'autre ; et
une paire de rouleaux ou galets de pincement (9) qui sont disposés sur les côtés opposés des parties de bord latéral (3) au niveau d'une position en aval des moyens de chauffage (5), les parties de bord latéral (3) étant prises en sandwich entre les rouleaux ou galets de pincement (9) après le préchauffage, de sorte qu'elles soient thermo-scellées l'une avec l'autre ;
l'appareil étant **caractérisé par** :
une pluralité d'orifices d'aspiration (7) qui sont formés dans chacune des surfaces de chauffage (6) ; et
une voie de circulation (8) qui est formée dans chacun des moyens de chauffage (5) et qui est mise en communication avec les orifices d'aspiration (7) de manière à aspirer de l'air à l'intérieur des orifices d'aspiration (7) de telle sorte que les parties de bord latéral (3) soient attirées par les orifices d'aspiration (7) de sorte qu'elles soient amenées en contact avec les surfaces de chauffage (6).

2. Appareil tel que revendiqué selon la revendication 1, dans lequel les orifices d'aspiration (7) sont espacés les uns des autres dans une direction (X) dans laquelle le film en matière plastique (1) est alimenté.

3. Appareil de thermo-scellage pour film en matière plastique dans lequel un film en matière plastique (1) est alimenté suivant sa direction longitudinale, le film en matière plastique (1) incluant des parties de bord latéral opposées (3) qui sont superposées l'une sur l'autre, les parties de bord latéral (3) étant thermo-scellées l'une avec l'autre suivant leur direction longitudinale, l'appareil comprenant :
une paire de moyens de chauffage (5) qui sont disposés sur des côtés opposés des parties de bord latéral (3) et qui comportent des surfaces de chauffage (6) de manière à préchauffer les parties de bord latéral (3), les surfaces de chauffage (6) étant espacées l'une de l'autre et opposées l'une à l'autre ; et
une paire de rouleaux ou galets de pincement (9) qui sont disposés sur les côtés opposés des parties de bord latéral (3) au niveau d'une position en aval des moyens de chauffage (5), les parties de bord latéral (3) étant prises en sandwich entre les rouleaux ou galets de pincement (9) après le préchauffage, de sorte qu'elles soient thermo-scellées l'une avec l'autre ;
l'appareil étant **caractérisé par** :
une gorge d'aspiration allongée (11, 12) qui est formée dans chacune des surfaces de chauffage (6) ; et
une voie de circulation (8) qui est formée dans chacun des moyens de chauffage (5) et qui est mise en communication avec la gorge d'aspiration (11, 12) de manière à aspirer de l'air à l'intérieur de la gorge d'aspiration (11, 12) de telle sorte que les parties de bord latéral (3) soient attirées par la gorge d'aspiration (11, 12) de sorte qu'elles soient amenées en contact avec les surfaces de chauffage (6).
